# EUROPÄISCHE PATENTSCHRIFT

(11) **EP 0 331 945 B1**
(45) Veröffentlichungstag und Bekanntmachung des Hinweises auf die Patenterteilung: **13.04.1994**
(21) Anmeldenummer: 89102729.4
(22) Anmeldetag: 17.02.1989
(51) Int. Cl.: B62D 25/00, B62D 25/02, B62D 25/20

(54) **Fahrzeugkarosserie mit seitlichen Schwellern**
Vehicle body with side stiffeners
Carrosserie de véhicule avec renforts latéraux

(30) Priorität: 07.03.1988 DE 3807417
(43) Veröffentlichungstag der Anmeldung: 13.09.1989
(73) Patentinhaber: Bayerische Motoren Werke Aktiengesellschaft, 80788 München (DE)
(72) Erfinder: Beilschmidt, Dietmar, D-8058 Erding (DE); König, Johann, D-8066 Günding (DE)

(56) Entgegenhaltungen:
- EP-A- 0 037 587
- WO-A-84/00520
- DE-A- 1 806 402
- FR-A- 1 082 381
- FR-A- 2 165 356
- US-A- 3 132 891
- PATENT ABSTRACTS OF JAPAN vol. 11, no. 321 (M-633)(2768) 20 Oktober 1987,& JP-A-62 103264 (MAZDA MOTOR CORPORATION) 13 Mai 1987,

## Beschreibung

Die Erfindung bezieht sich auf eine Kraftfahrzeugkarosserie mit seitlichen Schwellern der im Oberbegriff des Patentanspruchs 1 genannten und aus der DE-A-18 06 402 (Fig. 6) hervorgehenden Art.

Bei der aus dieser Druckschrift bekannten Kraftfahrzeugkarosserie weisen die beiden seitlichen Schweller jeweils einen Seitenwandabschnitt und einen Bodenblechabschnitt auf, die über einen nach unten ragenden Randflansch unter Zwischenlage eines fahrzeuginnenseitigen Wandungsteils miteinander verschweißt sind. Dabei verläuft das fahrzeuginnenseitige Wandungsteil etwa lotrecht und ist über seinen obenliegenden Längsrand mit dem Seitenwandabschnitt unter Zwischenlage eines sich im Hohlraum des Schwellers befindenden Verstärkungsprofils verschweißt. Dieses hat eine muldenförmige, der Fahrzeugaußenseite zugewandte und dabei im Bereich des Seitenwandabschnitts liegende Einpressung, wobei der untenliegende Randbereich des Verstärkungsprofils auf der Innenseite des Seitenwandabschnitts aufliegt und mit diesem verschweißt ist. Schließlich befindet sich in dem vom fahrzeuginnenseitigen Wandungsteil und vom Verstärkungsprofil umgebenen Hohlraum ein längs des Schwellers verlaufender Luftleitungsschlauch. Das Verstärkungsprofil muß jedoch als ein separates Blechteil gefertigt und für seine Befestigung im Schweller an seinen gegenüberliegenden Längsrändern mit dem Seitenwandabschnitt verschweißt werden.

Aufgabe der Erfindung ist es daher, bei einer Kraftfahrzeugkarosserie der im Oberbegriff des Patentanspruchs 1 genannten Art den Seitenwand- und/oder Bodenblechabschnitt derart auszubilden, daß das Verstärkungsprofil in einfacher und rationeller Weise vorgesehen werden kann.

Zur Lösung der Aufgabe sind die im kennzeichnenden Teil des Patentanspruchs 1 dargelegten Merkmale vorgesehen.

Da das die muldenförmige Einpressung aufweisende Verstärkungsprofil erfindungsgemäß einstückig am Bodenblechabschnitt und/oder am Seitenwandabschnitt ausgebildet ist, kann es vorteilhafterweise durch eine bloße Blechumformung des jeweiligen Teils, also ohne einen zusätzlichen Arbeitsaufwand, vorgesehenen werden.

Bei zum Fahrzeuginnenraum hin offener muldenförmiger Einpressung des Verstärkungsprofils können bequem Kabelbäume oder dgl. langgestreckte Teile von oben eingesetzt werden (Merkmal des Patentanspruchs 2).

Durch mehrere zwischen dem Boden der muldenförmigen Einpressung des Verstärkungsprofils und dem zugewandten Seitenwandabschnitt angeordnete Schottbleche wird zum einen die Steifigkeit des Schwellers erhöht. Darüber hinaus werden Vibrationsschwingungen im Bereich des Schwellers durch die Schottbleche weitgehend verhindert (Merkmale des Patentanspruchs 3).

Die zum Fahrzeuginnenraum hin offene muldenförmige Einpressung des Verstärkungsprofils kann durch ein zweckmäßigerweise aus Kunststoff bestehendes Wandungsteil mit einer Vielzahl von Durchgangsöffnungen - die in den Fahrzeuginnenraum münden - überdeckt werden, so daß durch das Wandungsteil in einfacher Weise ein Luftführungskanal gebildet ist. Zur Verhinderung eines Wärmetausches zwischen diesem und der muldenförmigen Einpressung des Verstärkungsprofils ist ein dünnwandiges Trennelement, Wärmeschutzfolie oder dgl. vorgesehen. Dabei werden auch in der muldenförmigen Einpressung des Verstärkungsprofils vorhandene Kabelbäume oder dgl. vom dünnwandigen Trennelement überdeckt (Merkmale der Patentansprüche 4 bis 6).

Damit durch das erfindungsgemäß ausgebildete Verstärkungsprofil im Bereich des mittleren Tragpfostens die Steifigkeit der Fahrzeugkarosserie nicht vermindert wird, ist gemäß den Merkmalen des Patentanspruchs 7 eine am Tragpfosten und am Bodenblech befestigte Stützstrebe vorgesehen.

Ein Ausführungsbeispiel der Erfindung ist in der Zeichnung dargestellt und wird im folgenden erläutert. Es zeigt:
- Fig. 1: eine perspektivische Ansicht des Schwellerbereichs mit einem Verstärkungsprofil mit muldenförmiger Einpressung und einem Luftführungskanal vom Fahrzeuginnenraum her,
- Fig. 2: einen Vertikalschnitt im vorderen Bereich des Schwellers in größerer Darstellung.

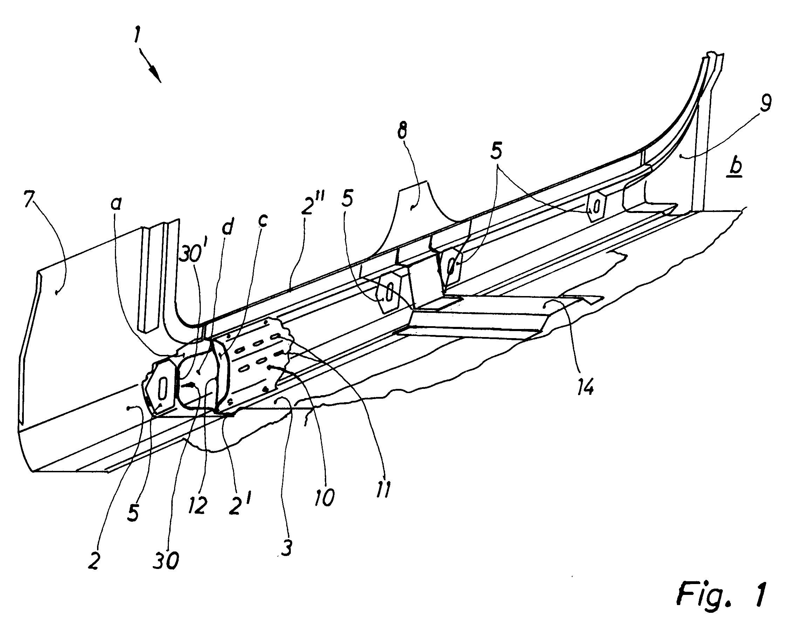

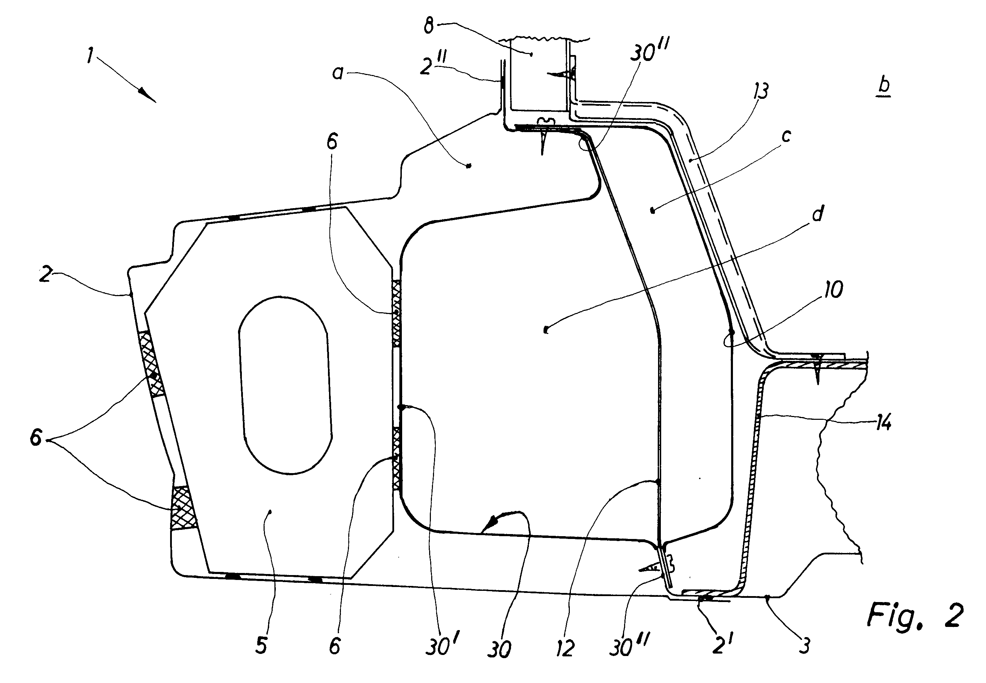

Der in den Figuren 1 und 2 dargestellte Bereich eines Schwellers 1 verläuft an den beiden Längsseiten einer Personenkraftwagenkarosserie, wobei der in Fig. 1 gezeigte Schweller 1 in Fahrtrichtung rechtsseitig liegt. Dieser besteht aus einem am unteren Karosserierand liegenden Seitenwandabschnitt 2 und einem Bodenblechabschnitt 3, die miteinander über einen Randflansch 2' unter Bildung einer an der Karosserieunterseite liegenden Überlappung verbunden sind. Der Seitenwandabschnitt 2 ist zur Fahrzeugaußenseite hin ausgebuchtet (Fig. 2) und schließt dadurch im Bereich des Schwellers 1 mit dem Bodenblechabschnitt 3 einen Hohlraum a ein. In diesem ist ein einstückig am Bodenblechabschnitt 3 ausgebildetes Verstärkungsprofil 30 mit einer im Querschnitt etwa U-förmigen muldenförmigen Einpressung angeordnet, deren Boden 30' zur Fahrzeugaußenseite hin gerichtet ist, so daß sie zum Fahrzeuginnenraum b hin offen ist; Es ist jedoch auch denkbar, daß sowohl im Seitenwandabschnitt 2 als auch im Bodenblechabschnitt 3 jeweils eine muldenförmige Einpressung ausgebildet ist, die auf gleicher Höhe liegen und einseitig zum Fahrzeuginnenraum b hin offen sind. Schließlich sind der Bodenblechabschnitt 3 und der Seitenwandabschnitt 2 an einer obenliegenden Längsnaht 2'' miteinander verschweißt.

Wie in Fig. 1 ersichtlich, sind zwischen dem Boden 30' der muldenförmigen Einpressung des Verstärkungsprofils 30 und dem diesem gegenüberliegenden Wandungsbereich des Seitenwandabschnitts 2 vier Schottbleche 5 eingesetzt, die zur Erhöhung der Steifigkeit des Schwellers 1 und zum Verhindern von Vibrationsschwingungen dienen. Die Schottbleche 5 sind dabei an ihren obenliegenden und untenliegenden, etwa waagrecht verlaufenden Rändern mit dem Seitenwandabschnitt 2 durch Punktschweißen verbunden, während sie an ihren etwa lotrecht verlaufenden Außenkanten jeweils über zwei Treibgummistücke 6 mit dem Boden 30' der muldenförmigen Einpressung des Verstärkungsprofils 30 und der Seitenwand 2 verbunden sind. Im dargestellten Ausführungsbeispiel sind die Schottbleche 5 jeweils im Bereich des vorderen, mittleren und hinteren Tragpfostens 7, 8, 9 (A-; B-; C-Säule) angeordnet, welche einstückig am Schweller 1 ausgebildet sind. Bedarfsweise können natürlich auch mehr als vier Schottbleche 5 an beliebiger Stelle vorgesehen werden.

Die muldenförmige Einpressung des Verstärkungsprofils 30 ist am Bodenblechabschnitt 3 unter Bildung eines obenliegenden und untenliegenden Längsrandes 30'' ausgebildet, an denen unter Überdeckung der muldenförmigen Einpressung ein längs des Schwellers 1 verlaufendes Wandungsteil 10 festgeschraubt ist. Dieses hat eine Vielzahl von Durchgangsöffnungen 11, welche in den Fahrzeuginnenraum b gerichtet sind. Aufgrund dessen ist das Wandungsteil 10 zweckmäßigerweise als ein Kunststoffspritzgußteil gestaltet und dabei zweiteilig ausgebildet, wobei die Trennfuge der beiden Längsteile im Bereich des mittleren Tragpfostens 8 liegt. Das Wandungsteil 10 ist schließlich am obenliegenden und untenliegenden Längsrand 30'' der muldenförmigen Einpressung des Verstärkungsprofils 30 unter Zwischenlage eines dünnwandigen, aus Asbest oder dergleichen bestehenden Trennelements 12 festgeschraubt, so daß ein zum Einleiten von kühler oder erwärmter Luft dienender Luftführungskanal c gebildet ist. Dieser ist durch das dünnwandige Trennelement 12 vom längsverlaufenden Hohlraum d der muldenförmigen Einpressung des Verstärkungsprofils 30 abgetrennt, wobei das dünnwandige Trennelement 12 zur zuverlässigen Verhinderung eines Wärmetauschs zwischen dem Hohlraum d und dem Luftführungskanal c mit mindestens einer Wärmeschutzfolie bedeckt sein kann. Dabei kann der Hohlraum d der muldenförmigen Einpressung des Verstärkungsprofils 30 eine Querschnittsfläche von beispielsweise 95 cm² haben, während die Querschnittsfläche des Luftführungskanals c etwa 35 cm² betragen kann. Es besteht auch die Möglichkeit, daß sich das Wandungsteil 10 im Bereich des hinteren Tragpfostens 9 unter Bildung eines Krümmers bis zum Fahrzeuglängsmittelbereich erstreckt.

Damit der mittlere Tragpfosten 8 zuverlässig festigkeitsmäßig mit dem Bodenblechabschnitt 3 in Verbindung steht, ist am unteren Endabschnitt des mittleren Tragpfostens 8 eine biegesteif ausgebildete, etwa Z-förmig verlaufende Stützstrebe 13 festgeschraubt, die mit ihrem untenliegenden Endabschnitt unter Überdeckung des Wandungsteils 10 an einem Sitzträger 14 festgeschraubt ist. Dieser ist seinerseits im Bereich der Überlappung 2' des Seitenwandabschnitts 2 am Bodenblechabschnitt 3 befestigt und erstreckt sich dabei im Bereich des mittleren Tragpfostens 8 in Fahrzeugquerrichtung. Natürlich kann die Stützstrebe 13 mit ihrem untenliegenden Endabschnitt auch unmittelbar am Bodenblechabschnitt 3 befestigt werden.

Da der Hohlraum d der muldenförmigen Einpressung des Verstärkungsprofils 30 zum Fahrzeuginnenraum b hin offen ist, können von diesem aus von oben her und damit in bequemer Weise eine Anzahl von nicht dargestellten Kabelbäumen und/oder dergleichen langgestreckte Teile in den Hohlraum d der muldenförmigen Einpressung des Verstärkungsprofils 30 eingesetzt werden, wobei die einzelnen Kabel anschließend mit den jeweiligen elektrischen Verbrauchern verbunden werden. Nach dem Anordnen der Kabelbäume im Hohlraum d der muldenförmigen Einpressung wird diese durch das dünnwandige Trennelement 12 und ggf. durch das zweiteilige Wandungsteil 10 überdeckt. Dessen beide Teile sind verhältnismäßig kurz, so daß sie für ihre Montage an den Längsrändern 30'' der muldenförmigen Einpressung des Verstärkungsprofils 30 unkompliziert im Fahrzeuginnenraum b gehandhabt werden können. Da erst zuletzt die Stützstrebe 13 an ihren Befestigungsstellen angeschraubt wird, ist die erwähnte Montage der Kabelbäume, des Trennelements 12 und der beiden Wandungsteile 10 behinderungsfrei durchführbar.

## Patentansprüche

1. Kraftfahrzeugkarosserie mit seitlichen Schwellern (1), im wesentlichen bestehend aus einem Seitenwandabschnitt (2), einem mit diesem verbundenen Bodenblechabschnitt (3) und mindestens einem Verstärkungsprofil (30) mit wenigstens einer muldenförmigen Einpressung, dadurch gekennzeichnet, daß das Verstärkungsprofil (30) einstückig am Bodenblechabschnitt (3) und/oder am Seitenwandabschnitt (2) ausgebildet ist.

2. Kraftfahrzeug nach Anspruch 1, wobei der Seitenwandabschnitt (2) über einen Randflansch am Bodenblechabschnitt (3) befestigt und die muldenförmige Einpressung des Verstärkungsprofils (30) der Fahrzeugaußenseite zugewandt ist, dadurch gekennzeichnet, daß das Verstärkungsprofil (30) am Bodenblechabschnitt (3) ausgebildet ist.

3. Kraftfahrzeug nach Anspruch 2, dadurch gekennzeichnet, daß zwischen dem Boden (30') der muldenförmigen Einpressung des Verstärkungsprofils (30) und dem zugewandten Seitenwandabschnitt (2) abschnittsweise mehrere Schottbleche (5) angebracht sind.

4. Kraftfahrzeugkarosserie nach Anspruch 2, dadurch gekennzeichnet, daß die muldenförmige Einpressung des Verstärkungsprofils (30) zum Fahrzeuginnenraum (b) hin offen und dabei von einem am obenliegenden und untenliegenden Längsrand (30'') des Verstärkungsprofils (30) befestigten, aus Kunststoff oder Blech bestehenden Wandungsteil (10) abgedeckt ist, das eine Vielzahl von Durchgangsöffnungen (11) aufweist und zur Bildung eines Luftführungskanals (c) dient.

5. Kraftfahrzeugkarosserie nach Anspruch 4, dadurch gekennzeichnet, daß das Verstärkungsprofil (30) und der Luftführungskanal (c) durch eine Trennwand abgetrennt sind, die aus mindestens einer Wärmeschutzfolie und/oder einem dünnwandigen Trennelement (12) besteht.

6. Kraftfahrzeugkarosserie nach Anspruch 4, dadurch gekennzeichnet, daß das Wandungsteil (10) als ein Kunststoff-Spritzgußteil gestaltet ist und dabei mindestens aus zwei Längsteilen besteht.

7. Kraftfahrzeugkarosserie nach Anspruch 2 oder 4, gekennzeichnet durch mindestens eine biegesteif ausgebildete Stützstrebe (13), die bei Überdeckung des Wandungsteils (10) oder des Verstärkungsprofils (30) einerseits am unteren Endabschnitt eines Tragpfostens (8) und andererseits am Bodenblech (Sitzträger 14) lösbar oder unlösbar befestigt ist.

## Claims

1. A motor vehicle body with side stiffeners (1), substantially comprising a side wall portion (2), a floor panel portion (3) connected thereto, and at least one reinforcing member (30) having at least one trough-like indentation, characterised in that the reinforcing member (30) is integrally formed on the floor panel portion (3) and/or on the side wall portion (2).

2. A vehicle according to claim 1, in which the side wall portion (2) is secured to the floor panel portion (3) by an edge flange, and the trough-like indentation in the reinforcing member (30) faces the outside of the vehicle, characterised in that the reinforcing member (30) is formed on the floor panel portion (3).

3. A vehicle according to claim 2, characterised in that a number of partition plates (5) are disposed at intervals between the floor (30') of the trough-like indentation in the reinforcing member (30) and the facing side wall portion (2).

4. A vehicle body according to claim 2, characterised in that the trough-like indentation in the reinforcing member (30) is open towards the interior (b) of the vehicle and is covered by a plastics or metal wall part (10) secured to the top and bottom longitudinal edge (30'') of the reinforcing member (30), the wall part having a number of through-openings (11) and forming an air duct (c).

5. A vehicle body according to claim 4, characterised in that the reinforcing member (30) and the air duct (c) are separated by a partition wall comprising at least one heat-insulating foil and/or one thin-walled partition element (12).

6. A vehicle body according to claim 4, characterised in that the wall part (10) is an injection-moulded plastics part and comprises at least two longitudinal parts.

7. A vehicle body according to claim 2 or 4, characterised by at least one rigid supporting strut (13) which covers the wall part (10) or the reinforcing member (30) and is releasably or non-releasably secured at one end to the bottom end portion of a supporting upright (8) and at the other end to the floor panel (seat support 14).

## Revendications

1. Carrosserie de véhicule automobile avec des renforts latéraux (1), composés essentiellement d'un tronçon de paroi latéral (2), d'un tronçon de fond (3) en tôle relié à celle-ci et au moins un profilé de renforcement (30) avec au moins une empreinte en forme d'auge, caractérisée en ce que le profilé de renforcement (30) forme une seule pièce avec le tronçon de fond (3) en tôle et/ou le tronçon de paroi latéral (2).

2. Véhicule selon la revendication 1, dans lequel le tronçon de paroi latéral (2) est fixé sur le tronçon de fond (3) en tôle par une bride de bord et l'empreinte du profilé de renforcement (30) est associée au côté extérieur du véhicule, caractérisé en ce que le profilé de raccordement (30) est formé sur le tronçon de fond (3) en tôle.

3. Véhicule selon la revendication 2, caractérisé en ce qu'entre le fond (30') de l'empreinte en forme d'auge du profilé de renforcement (30) et le tronçon de paroi latéral (2) tourné vers lui sont disposées, par sections, plusieurs tôles de cloisonnement (5).

4. Carrosserie de véhicule selon la revendication 2, caractérisée en ce que l'empreinte en forme d'auge de profilé de renforcement (30) est ouverte vers l'intérieur du véhicule (b) et en outre est recouverte par une partie de paroi (10) en matière plastique ou en tôle, fixée au bord longitudinal (30'') du profilé de renforcement (30) situé en haut et en bas, pièce de paroi (10) qui comprend un grand nombre d'ouvertures de passage (11) et sert à la formation d'un canal d'amenée d'air (c), et est recouverte de matière plastique ou en tôle.

5. Carrosserie de véhicule selon la revendication 4, caractérisée en ce que le profilé de renforcement (30) et le canal d'amenée d'air (c) sont séparés par une paroi, composée d'une feuille de protection thermique et/ou d'un élément de séparation à paroi mince (12).

6. Carrosserie de véhicule selon la revendication 4, caractérisée en ce que la pièce de paroi (10) est réalisée en matière plastique coulée par injection et en outre est constituée d'au moins deux parties longitudinales.

7. Carrosserie de véhicule selon la revendication 2 ou la revendication 4, caractérisée par au moins une entretoise d'appui (13), résistant au pliage, qui est fixée détachable ou non par recouvrement de la pièce de paroi (10) ou du profilé de renforcement (30) d'une part sur le tronçon d'extrémité inférieur d'un montant (8) et d'autre part sur la tôle du fond (porte siège 14).
